# EUROPEAN PATENT APPLICATION

(11) **EP 1 493 923 A2**
(43) Date of publication of application: **05.01.2005**
(21) Application number: 04015486.6
(22) Date of filing: 01.07.2004
(51) Int. Cl.: F04B 27/10, F04B 49/22

(54) **Swash plate compressor**

(30) Priority: 03.07.2003 JP 2003191364
(71) Applicant: Kabushiki Kaisha Toyota Jidoshokki, Kariya-shi, Aichi-ken (JP)
(72) Inventor: Hibino, Sokichi, Kariya-shi, Aichi-ken (JP); Morishita, Atsuyuki, Kariya-shi, Aichi-ken (JP); Murakami, Tomohiro, Kariya-shi, Aichi-ken (JP); Fukanuma, Tetsuhiko, Kariya-shi, Aichi-ken (JP); Kayukawa, Hiroaki, Kariya-shi, Aichi-ken (JP); Kubo, Hiroshi, Kariya-shi, Aichi-ken (JP)
(74) Representative: Leson, Thomas Johannes Alois, Dipl.-Ing.

(57) **Abstract**

In a piston type compressor, a piston is respectively accommodated in a plurality of cylinder bores arranged around a rotary shaft. A rotary valve has a suction guiding passage for introducing gas from a suction pressure region into a compression chamber when in communication therebetween. A suction timing control passage is formed in the rotary valve and is constantly in communication at its first end with the suction pressure region, while preceding the suction guiding passage communicating at its second end with the compression chamber. A suction timing control valve is arranged in the control passage, having a valve body which opens and closes the control passage in response to difference between force resulting from pressure on a side of the suction pressure region to open the valve body and force resulting from pressure on a side of the compression chamber to close the valve body.

## Description

### BACKGROUND OF THE INVENTION

The present invention relates to a piston type compressor using a rotary valve as a suction valve.

For example, in a piston type compressor for use in a refrigerant compressor of a vehicle air conditioner, a reed valve type suction valve is generally used. In a volume-increasing process of a compression chamber while a piston moves from a top dead center to a bottom dead center, as the compression chamber becomes lower in pressure than a suction pressure region, refrigerant gas in the suction pressure region flows into the compression chamber by pushing away a suction valve. The suction valve constituted of a differential pressure regulating valve such as reed valve constantly ensures an appropriate timing of suction initiation when the refrigerant gas is introduced from the suction pressure region into the compression chamber. However, the suction valve constituted of the differential pressure regulating valve tends to generate abnormal noise due to self-excited vibration.

Then, there has conventionally been a piston type compressor using a rotary valve as a suction valve, which rotary valve does not generate self-excited vibration. This rotary valve forms therein a suction guiding passage which constantly communicates with the suction pressure region, and the suction guiding passage on the side of the compression chamber is opened at the outer peripheral surface of the rotary valve. The suction guiding passage communicates sequentially with a compression chamber in a volume-increasing process as the rotary valve integrally rotates with a rotary shaft of the compressor.

In the piston type compressor using the rotary valve as a suction valve, a timing of the suction initiation for refrigerant gas from the suction pressure region to the compression chamber is determined by a position where the suction guiding passage is opened on the outer peripheral surface of the rotary valve. However, an appropriate timing of the suction initiation differs based upon driving condition of the piston type compressor. In other words, the appropriate timing of the suction initiation differs based upon variation of suction pressure in accordance with variation of rotational speed of the piston type compressor, variation of suction pressure in accordance with variation of the displacement of a variable displacement compressor and the like. Therefore, using the rotary valve as a suction valve, it is difficult to be constantly synchronous an actual timing of the suction initiation and an appropriate timing of the suction initiation.

Accordingly, when the actual timing of the suction initiation is too much earlier than the appropriate timing of the suction initiation, the refrigerant gas remaining in the compression chamber is higher in pressure than the suction guiding passage communicating with the suction pressure region. Therefore, the refrigerant gas in the compression chamber flows back to the suction guiding passage in the rotary valve thereby to generate large suction pulsation. The suction pulsation causes the compressor to generate abnormal noise. In addition, as the refrigerant gas of high temperature in the compression chamber flows back to the suction guiding passage, the refrigerant gas introduced into another compression chamber is heated and expanded, with a consequence of reduced volumetric efficiency of the piston type compressor.

On the contrary, when the actual timing of the suction initiation is too much later than the appropriate timing of the suction initiation, the compression chamber is too much lower in pressure than the suction pressure region. This pressure difference promotes the refrigerant gas to rapidly flow into the compression chamber thereby to generate large suction pulsation.

To solve such problem, it has been proposed that the rotary valve forms a notch passage at opening edge of the suction guiding passage on the outer peripheral surface thereof, for example, as disclosed in Unexamined Japanese Patent Publication No. 5-164044. This notch passage is formed on the preceding side of the opening of the suction guiding passage in the rotational direction of the rotary valve. Accordingly, the notch passage communicates with the compression chamber by preceding the other portion of the opening of the suction guiding passage thereby to allow a small amount of refrigerant gas to flow in and out of the compression chamber when the opening of the suction guiding passage initiates communication with the compression chamber.

Accordingly, even if the actual timing of the suction initiation is much earlier than the appropriate timing of the suction initiation, the amount of refrigerant gas flowing back from the compression chamber to the suction guiding passage is small thereby to prevent generation of suction pulsation and deterioration of volumetric efficiency. On the contrary, even if the actual timing of the suction initiation is much later than the appropriate timing of the suction initiation, the refrigerant gas is prevented from rapidly flowing from the suction guiding passage to the compression chamber thereby to prevent generation of suction pulsation.

In the above Publication, the fact remains that the notch passage allows the refrigerant gas to flow in and out of the compression chamber even if the refrigerant gas is a small amount. That is, even if a technique of the above Publication is applied, difference between the actual timing of the suction initiation and the appropriate timing of the suction initiation cannot be prevented, so that it is not sure that generation of problems due to this difference such as abnormal noise is efficiently prevented. Therefore, there is a need for efficiently preventing noise generation by providing adjustable timing of suction initiation in response to driving condition of the piston type compressor using a rotary valve as a suction valve.

### SUMMARY OF THE INVENTION

In accordance with the present invention, a piston type compressor has a housing, a rotary shaft, a piston, a rotary valve, a suction timing control passage and a suction timing control valve. The housing forms a suction pressure region and a plurality of cylinder bores which respectively forms a compression chamber. The rotary shaft is rotatably supported by the housing. The cylinder bores are arranged around the rotary shaft. The piston is accommodated in each cylinder bore. The rotary valve has a suction guiding passage for introducing gas from the suction pressure region into the compression chamber. The gas is introduced from the suction pressure region into the compression chamber through the suction guiding passage when the compression chamber communicates with the suction guiding passage. The suction timing control passage is formed in the rotary valve. A first end of the suction timing control passage is constantly in communication with the suction pressure region, while a second end of the suction timing control passage precedes the suction guiding passage communicating with the compression chamber. The suction timing control valve is arranged in the suction timing control passage. The suction timing control valve has a valve body which opens and closes the suction timing control passage in response to difference between force resulting from pressure on a side of the suction pressure region to open the valve body and force resulting from pressure on a side of the compression chamber to close the valve body.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a longitudinal cross-sectional view of a variable displacement swash plate type compressor according to a first preferred embodiment of the present invention;
FIG 2 is a cross-sectional view that is taken along the line I-I in FIG. 1;
FIG. 3 is a partially enlarged longitudinal cross-sectional view in a state where a suction timing control valve is opened according to the first preferred embodiment of the present invention;
FIG. 4 is a partially enlarged longitudinal cross-sectional view according to a second preferred embodiment of the present invention;
FIG. 5 is a partially longitudinal cross-sectional view according to a third preferred embodiment of the present invention;
FIG. 6 is a cross-sectional view that is taken along the line II-II in FIG. 5;
FIG. 7 is a partially enlarged longitudinal cross-sectional view according to the third preferred embodiment of the present invention;
FIG. 8A is a perspective view illustrating a rotational motion of a rotary valve in a state where a suction timing control valve is closed;
FIG. 8B is a perspective view illustrating the rotational motion of the rotary valve in a state where the suction timing control valve is opened; and
FIG. 9 is a partially enlarged longitudinal cross-sectional view according to a fourth preferred embodiment of the present invention.

### DETAILED DESCRIPTION OF THE PREFERRED EMBODIMENTS

A variable displacement swash plate type compressor for compressing refrigerant in use for a vehicle air conditioner in first through fourth preferred embodiments according to the present invention will now be described. It is noted that only differences from the first preferred embodiment are described in the second through fourth preferred embodiments. The same reference numerals denote the substantially identical components to those of the first preferred embodiment, and description of the identical components is omitted.

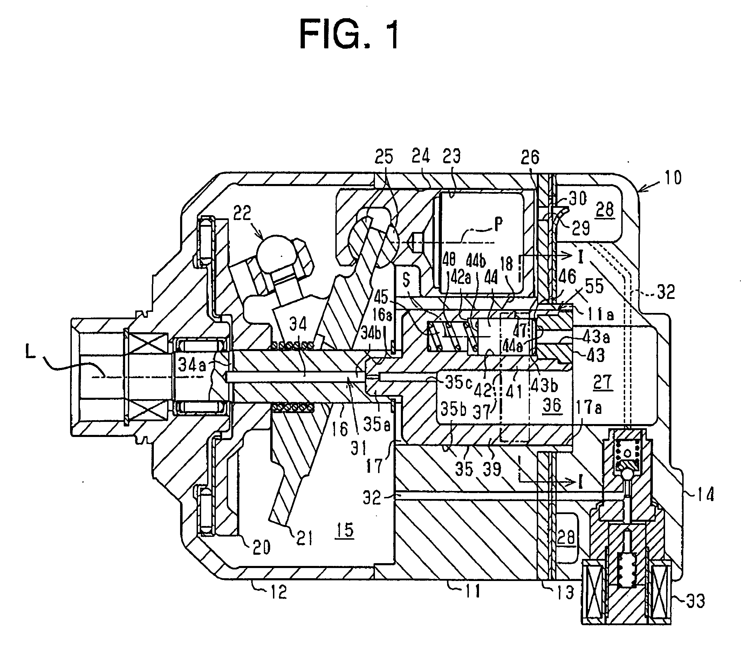

A first preferred embodiment of the present invention will now be described with reference to FIGS. 1 through 3. The left side and the right side respectively correspond to the front side and the rear side of a compressor 10 in FIG. 1.

As shown in FIG. 1, the compressor 10 includes a cylinder block 11, a front housing 12 connected to the front end of the cylinder block 11, a rear housing 14 connected to the rear end of the cylinder block 11 through a valve port assembly 13. These cylinder block 11, front housing 12 and rear housing 14 cooperatively form a housing of the compressor 10.

A crank chamber 15 is formed in a region surrounded by the cylinder block 11 and the front housing 12. A rotary shaft 16 extends through the crank chamber 15 and is rotatably supported by the front housing 12 and the cylinder block 11. The rotary shaft 16 is operatively coupled to an engine (not shown) for traveling a vehicle and is rotated by receiving power from the engine.

A lug plate 20 is fixedly connected to the rotary shaft 16 in the crank chamber 15 so as to integrally rotate therewith. A swash plate or a cam plate 21 is accommodated in the crank chamber 15. The swash plate 21 is slidably and inclinably supported by the rotary shaft 16. A hinge mechanism 22 is interposed between the lug plate 20 and the swash plate 21. Accordingly, the swash plate 21 is integrally rotatable with the lug plate 20 and the rotary shaft 16 while being inclinable relative to the rotary shaft 16 with sliding movement in the direction of the rotation center axis (hereinafter, the axis) L of the rotary shaft 16 by hinge connection between the swash plate 21 and the lug plate 20 through the hinge mechanism 22 and also by support of the rotary shaft 16.

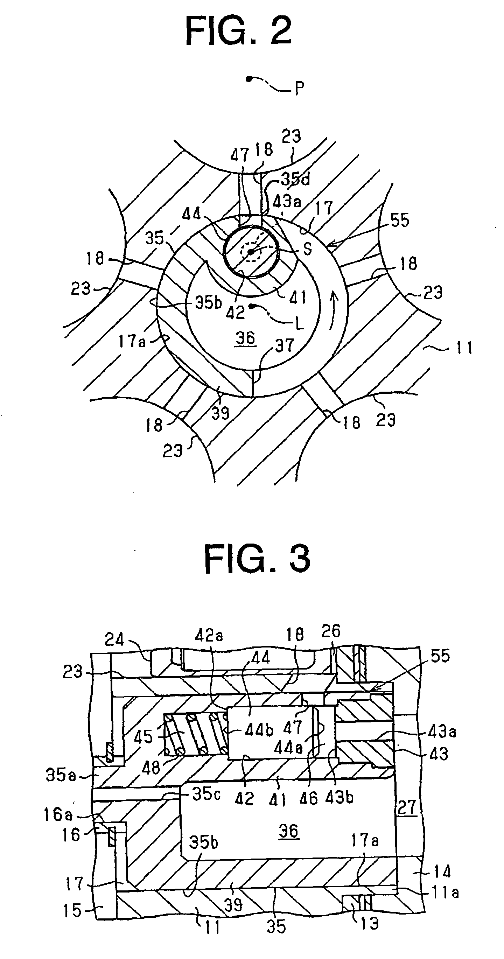

The compressor 10 has a multi-cylinder piston type compression mechanism. As shown in FIGS. 1 and 2, a plurality of cylinder bores 23 (five in the first preferred embodiment, and only one of them being shown in FIG. 1) is formed In the cylinder block 11 to extend therethrough by surrounding the rear side of the rotary shaft 16 at equiangular positions. A single-headed piston 24 is accommodated in each cylinder bore 23 so as to reciprocate therein.

As shown in FIG. 1, the front and rear openings of the cylinder bore 23 is respectively closed by the piston 24 and the valve port assembly 13, and the cylinder bore 23 forms therein a compression chamber 26 which varies its volume in accordance with reciprocation of the piston 24. Each piston 24 engages with the outer periphery of the swash plate 21 through a pair of shoes 25. Accordingly, rotation of the swash plate 21 in accordance with rotation of the rotary shaft 16 is converted to reciprocation of the piston 24 through the shoes 25.

The rear housing 14 forms therein a suction chamber 27, which is a part of suction pressure region, and a discharge chamber 28. The suction chamber 27 is formed at the center of the rear housing 14. The discharge chamber 28 is formed to surround the suction chamber 27. An external conduit connected to the low pressure side of a heat exchanger of an external refrigerant circuit (not shown) is connected to the suction chamber 27. Another external conduit connected to the high pressure side of the heat exchanger of the external refrigerant circuit is connected to the discharge chamber 28. This external refrigerant circuit and the compressor 10 cooperate to form a refrigerant circuit (a refrigeration cycle).

The refrigerant gas in the suction chamber 27 is introduced into the compression chamber 26 through a suction valve device 55 provided in the cylinder block 11 by increasing volume of the compression chamber 26 as the piston 24 moves from the top dead center to the bottom dead center. The refrigerant gas introduced in the compression chamber 26 is compressed up to a predetermined pressure and discharged to the discharge chamber 28 through a discharge port 29 and a discharge valve 30 which are respectively formed in the valve port assembly 13 by reducing volume of the compression chamber 26 as the piston 24 moves from the bottom dead center to the top dead center.

The compressor 10 provides a bleed passage 31, a supply passage 32 and a control valve 33 inside the housing thereof. The crank chamber 15 and the suction chamber 27 communicate with each other through the bleed passage 31. The bleed passage 31 has an axial passage 34 formed along the axis L of the rotary shaft 16. An inlet 34a of the axial passage 34 is opened to the crank chamber 15 near the lug plate 20, and an outlet 34b thereof is opened at the rear end surface of the rotary shaft 16. The discharge chamber 28 and the crank chamber 15 communicate with each other through the supply passage 32. A known electromagnetic control valve 33 is provided in the supply passage 32.

By adjusting the opening degree of the control valve 33, balance between the amount of high pressure gas introduced into the crank chamber 15 through the supply passage 32 and the amount of gas bled from the crank chamber 15 through the bleed passage 31 is controlled thereby to determine pressure in the crank chamber 15. In response to variation of the pressure in the crank chamber 15, pressure difference between the crank chamber 15 and the compression chamber 26 through the piston 24 is varied thereby to vary the inclination angle of the swash plate 21. As a result, stroke of the piston 24, that is, the displacement of the compressor 10 is adjusted.

For example, as the pressure in the crank chamber 15 is decreased, the inclination angle of the swash plate 21 increases and the stroke of the piston 24 increases thereby to increase the displacement of the compressor 10. On the contrary, as the pressure in the crank chamber 15 is increased, the inclination angle of the swash plate 21 reduces and stroke of the piston 24 reduces thereby to reduce the displacement of the compressor 10.

The suction valve device 55 will now be described.

As shown in FIGS. 1 and 2, the housing of the compressor 10 forms a cylindrical accommodating hole 17 in the center of the cylinder block 11 surrounded by the cylinder bores 23. The cylinder block 11 forms a boss 11 a at its rear end surface around the opening of the accommodating hole 17, and the boss 11a extends into the center portion of the rear housing 14 through the valve port assembly 13. Accordingly, the accommodating hole 17 and the suction chamber 27 are arranged in series in the direction of the axis L. The accommodating hole 17 and the compression chambers 26 are respectively in communication through a plurality of introducing passages 18 (five in the first preferred embodiment) formed radially in the cylinder block 11 around the axis L as a center.

A rotary valve or a rotor 35 is rotatably accommodated in the accommodating hole 17. The rotary valve 35 substantially forms a cylinder with a bottom at the front side. An inner peripheral surface 17a of the accommodating hole 17 and an outer peripheral surface 35b of the rotary valve 35 slidably contact with each other. The front end side of the rotary valve 35 forms therein a communication hole 35c extending forward in the axial direction. An introducing chamber 36 which is a cylindrical space of the rotary valve 35 and the axial passage 34 of the rotary shaft 16 (the outlet 34b) are in communication through the communication hole 35c. The introducing passage 36 is in communication with the suction chamber 27. The communication hole 35c and the introducing chamber 36 are part of the bleed passage 31.

The front end side of the rotary valve 35 is small in diameter (a small diameter portion 35a). The rotary shaft 16 forms a fitting hole 16a at its rear end surface facing the accommodating hole 17. The rotary valve 35 is press-fitted to the fitting hole 16a of the rotary shaft 16 with the small diameter portion 35a. Accordingly, the rotary shaft 16 and the rotary valve 35 are arranged along the same axis L and integrated with each other, so that the rotary valve 35 is rotated around the axis L of the rotary shaft 16 as a center with rotation of the rotary shaft 16, that is, with reciprocation of the piston 24. It is noted that the outer peripheral surface 35b of the rotary valve 35 and the inner peripheral surface 17a of the accommodating hole 17 constitute a slide bearing surface for rotatably supporting the rear end portion of the rotary shaft 16.

An outer wall 39 of the rotary valve 35 forms therein a suction guiding hole 37 in a predetermined angular range in the circumferential direction, and the suction guiding hole 37 constantly communicates with the introducing chamber 36. This suction guiding hole 37 serves as a suction guiding passage for sequentially communication between the introducing chamber 36, that is, the suction chamber 27, and the introducing passage 18 extending from the compression chamber 26 with rotation of the rotary valve 35.

In other words, when the compression chamber 26 is shifted to a volume-increasing process, the suction guiding hole 37 of the rotary valve 35 communicates with the introducing passage 18 of the cylinder block 11. Accordingly, the refrigerant gas in the suction chamber 27 is introduced into the compression chamber 26 through the introducing chamber 36 and suction guiding hole 37 of the rotary valve 35 and the introducing passage 18 of the cylinder block 11 in this order. It is noted that the suction guiding hole 37 initiates communication with the introducing passage 18 (the compression chamber 26) during the volume-increasing process of the compression chamber 26.

When the compression chamber 26 completes its volume-increasing process, that is, when the piston 24 is positioned at the bottom dead center, the suction guiding hole 37 is completely away from the introducing passage 18 in the circumferential direction thereby to stop introducing the refrigerant gas from the introducing chamber 36 to the compression chamber 26. As the compression chamber 26 is shifted to the volume-reducing process, a sealing region of the outer peripheral surface 35b of the rotary valve 35 keeps closed state between the introducing passage 18 and the introducing chamber 36, so that nothing prevents the refrigerant gas from being compressed and also the compressed refrigerant gas from being discharged to the discharge chamber 28.

According to the first preferred embodiment, in the rotary valve 35, a first suction valve is constituted of the sealing region of the outer peripheral surface 35b for closing the introducing passage 18 and the suction guiding hole 37 for establishing communication between the introducing passage 18 and the introducing chamber 36. Particularly, the suction guiding hole 37 is regarded as a first port of the first suction valve.

A suction timing control mechanism (a suction timing control passage and a suction timing control valve) for constantly ensuring the appropriate timing of the suction initiation while the refrigerant gas is being introduced from the suction chamber 27 to the compression chamber 26 will now be described.

As shown in FIGS. 1 and 2, a valve housing 41 is provided into the introducing chamber 36 of the rotary valve 35 by building up inwardly from a portion of the outer peripheral wall 39 of the rotary valve 35 in the circumferential direction. The valve housing 41 extends from the inner bottom end of the introducing chamber 36 to the opening end of the rotary valve 35. The valve housing 41 forms therein a cylindrical valve chamber 42 having opening at a rear end and extending along the direction of the axis L of the rotary valve 35.

The rear end of the valve chamber 42 is opened to the suction chamber 27 at the opening end of the rotary valve 35. The inner space of the valve chamber 42 is closed by a tap body 43 which is fixedly inserted into the opening end of the valve chamber 42. The tap body 43 forms therein a valve hole 43a for communication between the suction chamber 27 and the inner space of the valve chamber 42. The opening of the valve hole 43a in the inner space side of the valve chamber 42 is located on an inner end surface 43b of the tap body 43. The inner space of the valve chamber 42 forms therein a step 42a in the inner peripheral surface near the middle with setting the side of the tap body 43 to be larger in diameter than the other side.

A cylindrical poppet 44 is accommodated in the valve chamber 42. The poppet 44 is operable to slide between a closed position (as shown in FIG. 1) at which the valve hole 43a is closed such that a top end surface 44a of the poppet 44 contacts with the inner end surface 43b of the tap body 43 and an opened position (as shown in FIG. 3) at which the valve hole 43a is opened (fully opened) such that the outer periphery of a back surface 44b contacts with the wall surface of the step 42a. In other words, the top end surface 44a of the poppet 44 serves as a sealing surface, and the inner end surface 43b of the tap body 43 serves as a valve seat surface.

The poppet 44 slides at a position offset from the rotary valve 35 and along the direction of the axis L of the rotary valve 35. That is, the poppet 44 is located offset from the axis L such that the central axis S of the valve chamber 42 is in parallel relation to the axis L of the rotary valve 35. More particularly, the poppet 44 is located such that the axis S is offset toward the side of the axis P of the piston 24 positioned at the top dead center relative to a hypothetical plane which intersects vertically another hypothetical plane including the axis L of the rotary valve 35 and the central axis P.

A back pressure chamber 45 and a communication chamber 46 are respectively formed in the valve chamber 42 by arranging the poppet 44 in the valve chamber 42. The back pressure chamber 45 is located on the side of the back surface 44b of the poppet 44, that is, on the left side of FIG. 1. The communication chamber 46 is located on the side of the top end surface 44a of the poppet 44, that is, on the right side of FIG. 1. The rotary valve 35 forms a communication hole 47 extending therethrough in the radial direction at the rear end side of the outer peripheral wall 39. The inner end of the communication hole 47 is opened near the tap body 43 on the inner peripheral surface of the valve chamber 42. In a state where the poppet 44 is in contact with the wall surface of the step 42a for opening the valve hole 43, the inner end of the communication hole 47 is directly opened to the communication chamber 46 so as to communicate with the valve hole 43a, and further with the suction chamber 27, through the communication chamber 46.

The outer end of the communication hole 47 is opened at the outer peripheral surface 35b of the rotary valve 35, and the opening portion of the communication hole 47 is provided on a sealing region which faces the introducing passage 18 connected to the compression chamber 26 which has almost completed the volume-reducing process. That is, the time when the communication hole 47 initiates communication with the introducing. passage 18 connected to the compression chamber 26 is during the volume-reducing process (almost completing the volume-reducing process in the first preferred embodiment). Accordingly, in a state where the above piston 24 is positioned at the top dead center, the communication hole 47 has already initiated communication with the introducing passage 18 connected to the corresponding compression chamber 26 of the above piston 24. Consequently, the communication hole 47 precedes the suction guiding hole 37 to communicate with the introducing passage 18 connected to the compression chamber 26 during the volume-increasing process.

In the first preferred embodiment, a suction timing control passage which is constituted of the valve hole 43a, the communication chamber 46 and the communication hole 47, constantly communicates with the suction chamber 27 at first end and precedes the suction guiding hole 37 to communicate with the introducing passage 18 connected to the compression chamber 26 during the volume-increasing process at second end. Particularly, the valve hole 43a (strictly, the opening end on the side of the suction chamber 27) serves as the first end of the suction timing control passage, and the communication hole 47 (strictly, the outer end) serves as the second end of the suction timing control passage.

A clearance (diameter difference) is provided between the outer peripheral surface of the poppet 44 and the inner peripheral surface of the valve chamber 42. The communication hole 47 and the back pressure chamber 45 are constantly in communication through the clearance between the poppet 44 and the valve chamber 42. Accordingly, in a state where the communication hole 47 is in communication with the introducing passage 18 connected to the compression chamber 26, pressure in the compression chamber 26 is applied to the back pressure chamber 45 through the communication hole 47 and the clearance between the poppet 44 and the valve chamber 42.

An urging spring 48 constituted of a coil spring is interposed in the valve chamber 42 between the inner bottom surface of the valve chamber 42 and the back surface 44b of the poppet 44. A region on the front side relative to the step 42a in the valve chamber 42 (the small diameter portion) serves as a guide portion for guiding a fixed end of the urging spring 48 and stabilizing its position. The urging spring 48 urges the poppet 44 toward the tap body 43, that is, to close the valve hole 43a.

The position of the poppet 44, that is, the opening and closing of the valve hole 43a by the poppet 44 is determined by balance between the sum of urging force of the urging spring 48 to close the valve and force to close the valve resulting from pressure in the back pressure chamber 45, that is, pressure in the compression chamber 26, applied to the back surface 44b and opposing force to open the valve resulting from pressure in the valve hole 43a (that is, pressure in the suction chamber 27) applied to the top end surface 44a.

The urging spring 48 has a quite small urging force. Accordingly, when the pressure in the valve hole 43a is a little higher than the pressure in the back pressure chamber 45, the poppet 44 seated on the inner end surface 43b of the tap body 43 immediately leaves from the inner end surface 43b and moves to the position to contact with the step 42a. Also, when the pressure in the back pressure chamber 45 is a little higher than the pressure in the communication chamber 46 in a state where the valve hole 43a is opened, the poppet 44 immediately leaves from the step 42a and sits on the inner end surface 43b of the tap body 43 thereby to close the valve hole 43a.

In the first preferred embodiment, the valve housing 41, the valve chamber 42, the valve hole 43a, the poppet 44, the back pressure chamber 45, the communication chamber 46, the communication hole 47, the urging spring 48 and the like cooperatively form a suction timing control valve (a second suction valve) constituted of a differential pressure regulating valve. Particularly, the poppet 44 may be regarded as a valve body of the suction timing control valve, and the communication hole 47 may be regarded as a second port formed in the second suction valve.

As described above, the communication hole 47 of the rotary valve 35 precedes the suction guiding hole 37 to communicate with the introducing passage 18 connected to the compression chamber 26. In this state, when the compression chamber 26 is higher in pressure than the suction chamber 27, that is, when the timing of the suction initiation is too early, the poppet 44 keeps the valve hole 43a closed (as shown in FIC. 1) by force resulting from the pressure in the back pressure chamber 45 and the urging force of the urging spring 48. Accordingly, the timing of the suction initiation is delayed, so that the pressure in the compression chamber 26 is decreased due to an increase of the volume of the compression chamber 26. As a result, the refrigerant gas is prevented from flowing from the compression chamber 26 back to the suction chamber 27 when the compression chamber 26 initiates communication with the suction chamber 27.

On the contrary, in a state where the communication hole 47 precedes the suction guiding hole 37 to communicate with the introducing passage 18 to the compression chamber 26, when the compression chamber 26 is lower in pressure than the suction chamber 27, the poppet 44 immediately opens the valve hole 43a by force resulting from the pressure in the suction chamber 27 applied through the valve hole 43a (as shown in FIG. 3). Accordingly, the timing of the suction initiation for the refrigerant gas from the suction chamber 27 to the compression chamber 26 is prevented from delaying from the appropriate timing of the suction initiation thereby to prevent the refrigerant gas from rapidly flowing from the suction chamber 27 into the compression chamber 26.

It is noted that in the first preferred embodiment the position and region of the opening of the communication hole 47 and the position and region of the opening of the suction guiding hole 37 are determined on the outer peripheral surface 35b of the rotary valve 35 such that the suction of the refrigerant gas from the suction chamber 27 to the compression chamber 26 is initiated by opening the valve hole 43a by the poppet 44.

Also, in the first preferred embodiment, the suction of the refrigerant gas from the suction chamber 27 to the compression chamber 26 is designed to continue during a process when the communication with the introducing passage 18 is shifted from the communication hole 47 to the suction guiding hole 37. That is, a circumferential width 35d on the outer peripheral surface 35b between the opening of the communication hole 47 on the outer peripheral surface 35b of the rotary valve 35 and the opening of the suction guiding hole 37 is narrower than the maximum width in the circumferential direction of the opening (the opening on the inner peripheral surface 17a of the accommodating hole 17) of the introducing passage 18 such that the two openings are simultaneously communicate with the same introducing passage 18 (in other words, the same compression chamber 26).

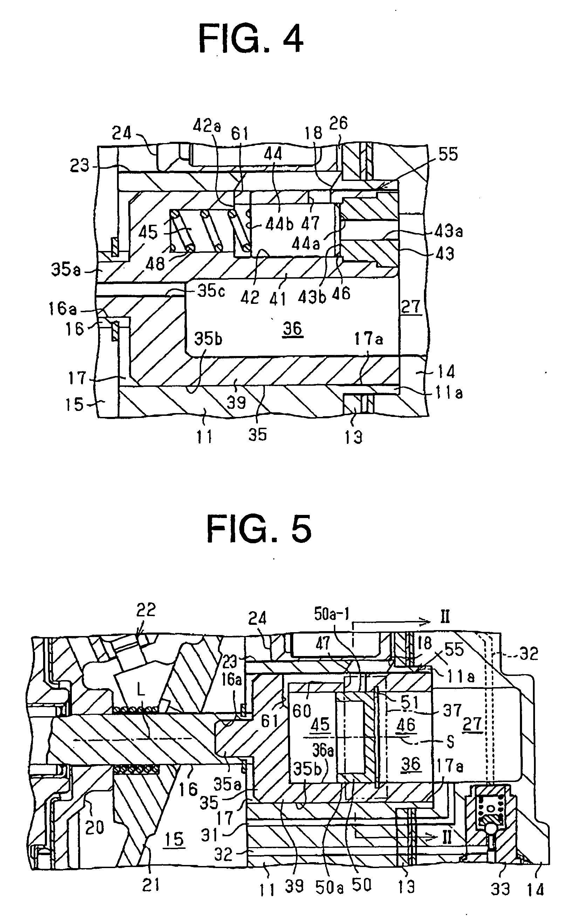

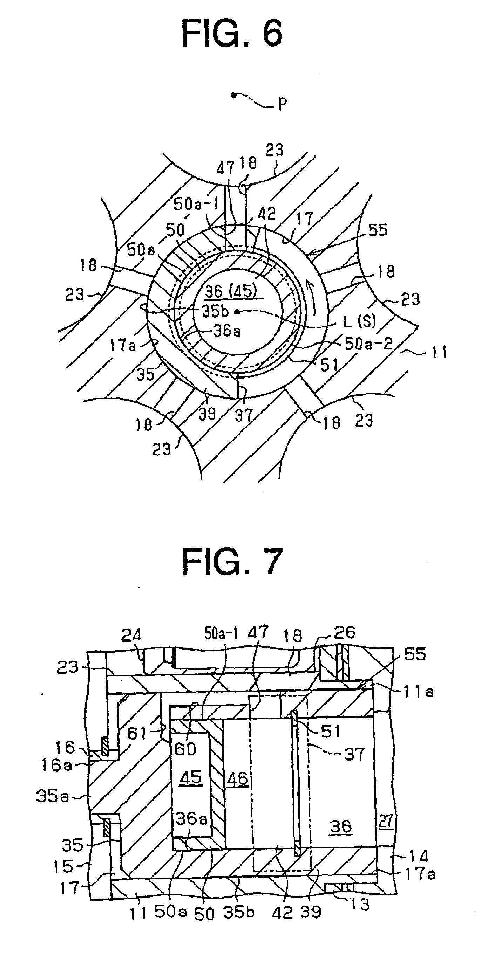

According to the first preferred embodiment, the following advantageous effects are obtained.
(1) The provision of the suction timing control mechanism makes it possible to adjust the timing of the suction initiation in response to the driving condition of the compressor 10. Accordingly, in comparison to the technique disclosed in the Unexamined Japanese Patent Publication No. 5-164044 which cannot adjust the timing of the suction initiation, abnormal noise and the like is effectively prevented from being generated.
(2) The suction timing control mechanism is only required for appropriately adjusting the timing of the suction initiation, and the refrigerant gas is mainly introduced from the suction chamber 27 into the compression chamber 26 through the suction guiding hole 37. Accordingly, the maximum distance between the position seated on the tap body 43 and the poppet 44 may be a little thereby to avoid a problem such as self-excited vibration with the pressure difference.
(3) For example, in a variable displacement swash plate type compressor without employing a rotary valve, the opening degree of a suction valve constituted of a differential pressure regulating valve needs to be larger in order to increase the amount of refrigerant gas introduced into a compression chamber when the inclination angle of the swash plate is large. That is, the maximum distance which the valve body of the suction valve may open needs to be larger (the distance which the valve body moves from its seated position to contact with the stopper). Therefore, since the amount of refrigerant gas flowing into the compression chamber is small during the small inclination angle of the swash plate, the valve body tends to generate self-excited vibration without contacting with the stopper.
   However, in the first preferred embodiment, as described above, the distance between the position where the poppet 44 sits on the tap body 43 and the position where the poppet 44 contacts with the wall surface of the step 42a may be small. Accordingly, even if the inclination angle of the swash plate 21 is small and thereby the refrigerant gas in the suction chamber 27 flows into the compression chamber 26 through the valve hole 43a, the communication chamber 46 and the communication hole 47, the poppet 44 contacts with the wall surface of the step 42a and does not generate the self-excited vibration.
(4) The communication hole 47 initiates communication with the compression chamber 26 during the volume-reducing process of the compression chamber 26. Accordingly, even if the appropriate timing of the suction initiation for the refrigerant gas from the suction chamber 27 to the compression chamber 26 appears just after the compression chamber 26 is shifted from the volume-reducing process to the volume-increasing process, the poppet 44 is operable to immediately open communication between the suction chamber 27 and the compression chamber 26. Thus, the timing of the suction initiation is effectively prevented from delaying from the appropriate timing of the suction initiation thereby to further effectively prevent the refrigerant gas from rapidly flowing from the suction chamber 27 into the compression chamber 26 when the compression chamber 26 initiates communication with the suction chamber 27.
(5) The poppet 44 is located offset from the axis L of the rotary valve 35. Accordingly, the surrounding of the opening of the introducing passage 18 at the offset poppet side ensures sealing because the outer peripheral surface 35b of the rotary valve 35 is tightly pressed by centrifugal force.
   Particularly, in the first preferred embodiment, the poppet 44 is arranged such that the axis S of the poppet 44 is offset from the axis L of the rotary shaft 35 toward the axis P of the piston positioned at the top dead center relative to a hypothetical plane which includes the axis L and intersects vertically another hypothetical plane including the axis L and the axis P. Accordingly, the outer peripheral surface 35b of the rotary valve 35 is tightly pressed against the surrounding of the opening of the introducing passage 18 connected to the compression chamber 26 during the late volume-reducing process by centrifugal force thereby to absolutely prevent the refrigerant gas of high pressure from leaking from the compression chamber 26, that is, compression leakage. This leads to improved performance of the compressor 10.
(6) The suction timing control valve constituted of the poppet rarely generates self-excited vibration of the valve body (the poppet 44) in comparison to the one constituted of a reed valve.
(7) The poppet 44 slides along the axis L of the rotary valve 35 for opening and closing the valve hole 43a. Accordingly, the rotary valve 35 having the suction timing control valve constituted of a poppet valve is easily be embodied. That is, the rotary valve 35 has less space in the radial direction than in the direction of the axis L, while the poppet valve requires large space for arrangement in the direction to move (in the front and rear directions of the axis S).
   A second preferred embodiment of the present invention will now be described with reference to FIG. 4.
   As shown in FIG. 4, the second preferred embodiment is different from the first preferred embodiment in that no clearance is provided between the outer peripheral surface of the poppet 44 and the inner peripheral surface of the valve chamber 42. The opening region of the introducing passage 18 on the inner peripheral surface 17a of the accommodating hole 17 is widened adjacent to the outer periphery of the back pressure chamber 45. The outer peripheral wall 39 of the rotary valve 35 forms therein a hole 61 which is in communication with the back pressure chamber 45 and opened on the outer peripheral surface 35b of the rotary valve 35. The hole 61 initiates communication at substantially the same timing with the same introducing passage 18 as the communication hole 47, and completes communication at substantially the same timing with the same introducing passage 18 as the communication hole 47. Accordingly, the pressure in the compression chamber 26 is applied to the back pressure chamber 45 through the introducing passage 18 and the hole 61.
   According to the second preferred embodiment, in addition to substantially the same advantageous effects to those mentioned in paragraphs (1) through (7) of the first preferred embodiment, the following advantageous effect is obtained.
(8) The back pressure chamber 45 is operable to communicate with the introducing passage 18 through an exclusive passage (the hole 61). Accordingly, in a state where the introducing passage 18 is in communication with the hole 61 and the communication hole 47, the pressure in the compression chamber 26 is directly reflected to the pressure in the back pressure chamber 45. Thus, when the appropriate timing of the suction initiation appears, the poppet 44 immediately moves to open the valve hole 43a without substantial delay, so that delayed response of the poppet 44 also effectively prevents that the actual timing of the suction initiation delays from the appropriate timing of the suction initiation.
   A third preferred embodiment of the present invention will now be described with reference to FIGS. 5 through 8B.
   As shown in FIG. 5, in the third preferred embodiment, the axial passage 34 of the rotary shaft 16 and the communication hole 35c of the rotary valve 35 are omitted, and the bleed passage 31 reaches the suction chamber 27 from the crank chamber 15 through the cylinder block 11, the valve port assembly 13 and the rear housing 14.
   As shown in FIG. 6, the build-up portion for forming the valve housing 41 in the first preferred embodiment is omitted in the rotary valve 35 of the third preferred embodiment. The introducing passage 36 of the rotary valve 35 is cylindrical in shape. Accordingly, the inner peripheral surface 36a of the introducing chamber 36 is a cylindrical inner surface of the outer peripheral wall (cylindrical wall) 39 of the rotary valve 35. The introducing chamber 36 doubles as the valve chamber 42. The tap body 43 (the valve hole 43a, as shown in FIG. 3) is omitted from the rotary valve 35.
   The introducing chamber 36 is a part of the suction timing control passage. Particularly, the opening end of the introducing chamber 36 (the rotary valve 35) on the side of the suction chamber 27 serves as a first end of the suction timing control passage. A circular clip 51 is fitted in the introducing chamber 36 near the suction chamber 27.
   A cylindrical poppet 50 having a bottom at one end is accommodated in the introducing chamber 36. The poppet 50 is arranged such that the bottom of the poppet 50 is located on the rear side (the right side in FIG. 5). The poppet 50 is operable to slide between the position where the outer periphery of the outer bottom surface contacts with (sits on) the circular clip 51 (as shown in FIG. 5) and the position where the opening end of the poppet 50 contacts with the inner bottom surface (stopper) of the introducing chamber 36 (as shown in FIG. 7). The sliding of the poppet 50 is performed such that an outer peripheral surface 50a of the poppet 50 slides on the inner peripheral surface 36a of the introducing chamber 36. That is, the outer peripheral wall 39 of the rotary valve 35 doubles as a cylindrical wall for slidably holding the poppet 50, and the axis S of the poppet 50 coincides with the axis L of the rotary valve 35.
   The inner end of the communication hole 47 is opened on the inner peripheral surface 36a of the introducing chamber 36 to a region which is closer to the poppet 50 than the circular clip 51. The inner end of the suction guiding hole 37 is opened on the inner peripheral surface 36a of the introducing chamber 36 to a region which ranges from the front side of the circular clip 51 to the rear side thereof along the direction of the axis S.

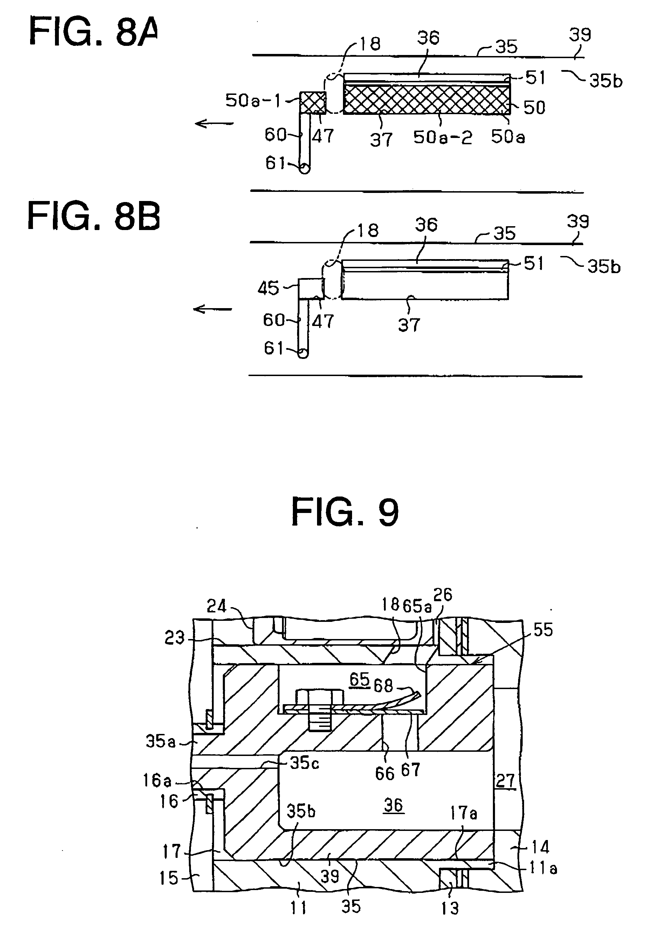

   FIGS. 8A and 8B linearly illustrate rotational movement of the rotary valve 35, while illustrating rotation of the suction guiding hole 37 and the communication hole 47 around the axis L by converting it into transfer toward the left side.
   As indicted by hatching in FIG. 8A, in a state where the poppet 50 is moved to contact with the circular clip 51, a first valve portion 50a-1 of the outer peripheral surface 50a of the poppet 50 closes the opening communicating the introducing chamber 36 with the communication hole 47. Also, in a state where the poppet 50 is moved to contact with the circular clip 51, a second valve portion 50a-2 which is different from the first valve portion 50a-1 in the outer peripheral surface 50a of the poppet 50 minimizes (but does not completely close) the opening degree of the opening communicating the introducing chamber-36 with the suction guiding hole 37.
   As shown in FIG. 8B, in a state where the poppet 50 is moved to a position to contact with the inner bottom surface of the introducing chamber 36, the first valve portion 50a-1 of the poppet 50 opens the opening communicating the introducing chamber 36 with the communication hole 47. Also, in a state where the poppet 50 is moved to a position to contact with the inner bottom surface of the introducing chamber 36, the second valve portion 50a-2 of the poppet 50 fully opens the opening degree of the opening communicating the introducing chamber 36 with the suction guiding hole 37.
   The outer peripheral wall 39 of the rotary valve 35 forms therethrough the hole 61 which communicates with the back pressure chamber 45 and is opened on the outer peripheral surface 35b of the rotary valve 35. The outer peripheral surface 35b of the rotary valve 35 forms therein a groove 60 extending from the communication hole 47 toward the front side. The hole 61 is in communication with the groove 60, while being opened in the back pressure chamber 45 at the bottom side of the introducing chamber 36. Accordingly, in a state where the communication hole 47 is in communication with the introducing passage 18 connected to the compression chamber 26, the pressure in the compression chamber 26 is applied to the back pressure chamber 45 through the introducing passage 18, the groove 60 and the hole 61, regardless of the position of the poppet 50.
   The position of the poppet 50, that is, the opening and closing of the communication hole 47 by the poppet 50 is determined by balance between force to close the valve resulting from the pressure in the back pressure chamber 45 applied to the side of the opening end of the poppet 50 and opposing force to the above force to open the valve resulting from the pressure in the communication chamber 46 (the suction chamber 27) applied to the outer bottom surface. It is noted that the urging spring 48 of the first preferred embodiment is omitted in the third preferred embodiment. Furthermore, in the third preferred embodiment, the suction of the refrigerant gas from the suction chamber 27 to the compression chamber 26 is not always initiated by opening the communication hole 47 by the first valve portion 50a-1 of the poppet 50.
   In the third preferred embodiment, the poppet 50, the back pressure chamber 45, the communication hole 47, the groove 60, the hole 61 and the like cooperatively form the suction timing control valve (the second suction valve) constituted of a differential pressure regulating valve.
   According to the third preferred embodiment, in addition to the same advantageous effects as mentioned in the paragraphs (1) through (4), and (6) through (8), the following advantageous effects are obtained.
(9) The poppet 50 is arranged such that the axis S of the poppet 50 coincides with the axis L of the rotary valve 35. Accordingly, rotational balance of the rotary valve 35 is improved. In comparison to the axis L of the rotary valve 35 which is offset from the axis S of the poppet 50, eccentric load applied to the rotary valve 35 based upon centrifugal force is reduced thereby to improve durability of the rotary valve 35. Additionally, in the rotary valve 35, a structure for slidably holding the poppet 50 (cylindrical wall) is provided on the same axis as the axis L thereby to reduce manufacturing cost of the rotary valve 35 in comparison to the structure provided offset axis from the axis L.
(10) The outer peripheral wall (cylindrical wall) 39 of the rotary valve 35 doubles as the cylindrical wall for slidably holding the poppet 50. Accordingly, another cylindrical wall for slidably holding the poppet 50 is not required for the rotary valve 35 thereby to further reduce manufacturing cost of the rotary valve 35. Additional, since the introducing chamber 36 may be large thereby to smooth the suction of the refrigerant gas from the suction chamber 27 to the compression chamber 26 through the suction guiding hole 37 and to improve suction efficiency.
(11) The poppet 50 provides the first valve portion 50a-1 for opening and closing the communication hole 47 and the second valve portion 50a-2 for adjusting the opening degree of the suction guiding hole 37. The second valve portion 50a-2 increases the opening degree of the suction guiding hole 37 to the introducing chamber 36 in a state where the first valve portion 50a-1 opens the communication hole 47. That is, for example, the second valve portion 50a-2 increases the opening degree of the suction guiding hole 37 to the introducing chamber 36 in a state where the first valve portion 50a-1 opens the communication hole 47 at the time when the suction guiding hole 37 initiates communication with the compression chamber 26 (in a state where the appropriate timing of the suction initiation has appeared or has already passed). Accordingly, the refrigerant gas is smoothly introduced from the suction chamber 27 to the compression chamber 26 through the suction guiding hole 37 thereby to improve suction efficiency of the compressor 10.

Furthermore, in a state where the first valve portion 50a-1 closes the communication hole 47, the second valve portion 50a-2 decreases the opening degree of the suction guiding hole 37 to the introducing chamber 36. That is, for example, in a state where the first valve portion 50a-1 closes the communication hole 47 at the time when the suction guiding hole 37 initiates communication with the compression chamber 26 (the appropriate timing of the suction initiation has not appeared), the second valve portion 50a-2 decreases the opening degree of the suction guiding hole 37 to the introducing chamber 36. Accordingly, the amount of refrigerant gas flowing from the compression chamber 26 back to the side of the suction guiding hole 37 is reduced thereby to further efficiently prevent generation of suction pulsation and a decrease in volumetric efficiency.

In summary, in the third preferred embodiment, the provision of the second valve portion 50a-2 in the poppet 50 enables the compressor 10 to appropriately deal with "large delay of the appropriate timing of the suction initiation" which is not dealt with only by the first valve portion 50a-1.

It is noted that the above described "state where the first valve portion 50a-1 closes the communication hole 47 at the time when the suction guiding hole 37 initiates communication with the compression chamber 26", for example, tends to be occurred during small displacement of the compressor 10. The small displacement of the compressor 10 promotes pulsation of refrigerant gas to be transmitted due to low density of the refrigerant gas, dryness of the refrigerant gas and the like. Thus, it is particularly effective for the compressor 10 to efficiently prevent generation of suction pulsation during the small displacement which promotes such pulsation to be transmitted.

After a certain period has passed since the time when the suction guiding hole 37 initiates communication with the compression chamber 26, the communication hole 47, which precedes the suction guiding hole 37, faces another compression chamber 26 which is different from the compression chamber 26 with which the suction guiding hole 37 is in communication, as shown in FIG. 6. Then, when the appropriate timing of the suction initiation delays largely during the small displacement of the compressor 10, the first valve portion 50a-1 does not open the communication hole 47 facing the above compression chamber 26, while the communication hole 47 is shifted to face another compression chamber 26.

That is, when the appropriate timing of the suction initiation delays largely, the communication hole 47 is constantly closed by the first valve portion 50a-1 thereby to constantly reduce the opening degree of the suction guiding hole 37 by the second valve portion 50a-2. As a result, the refrigerant gas flowing toward the compression chamber 26 through the suction guiding hole 37 is throttled and rectified thereby to efficiently prevent suction pulsation around all stages of volume-increasing process during the small displacement of the compressor 10.

A fourth preferred embodiment of the present invention will now be described with reference to FIG. 9.

In the above first through third preferred embodiments, the poppet valve is employed as the suction timing control valve. In the fourth preferred embodiment, as shown in FIG. 9, a reed valve is employed as the suction timing control valve. The suction timing control valve constituted of a reed valve is structurally simple, for example, in comparison to the poppet valve thereby to reduce the number of manufacturing processes for the suction timing control valve.

The outer peripheral surface 35b of the rotary valve 35 forms therein a valve accommodating recess 65, and the inner space of the valve accommodating recess 65 and the introducing chamber 36 are in communication through a communication hole 66. The valve accommodating recess 65 serves as the same as the communication hole 47 (as shown in FIG. 2) of the above preferred embodiments. Accordingly, an opening 65a of the valve accommodating recess 65 precedes the suction guiding hole 37 communicating with the introducing passage 18 connected to the compression chamber 26 during the volume-increasing process (as shown in FIG. 2). In the fourth preferred embodiment, the valve accommodating recess 65, the communication hole 66 and the introducing chamber 36 cooperatively form the suction timing control passage. Particularly, the introducing chamber 36 serves as a first end of the suction timing control passage, and the valve accommodating recess 65 serves as a second end of the suction timing control passage.

A reed-type valve body 67 is accommodated in the valve accommodating recess 65, and the valve body 67 opens and closes the communication hole 66 in response to pressure difference between the introducing chamber 36 and the valve accommodating recess 65. The maximum opening degree of the valve body 67 is regulated by a retainer 68 which is arranged in the valve accommodating recess 65. It is noted that the valve body 67 has an extremely small urging force. Accordingly, when the introducing chamber 36 is a little higher in pressure than the valve accommodating recess 65, the valve body 67 immediately moves to contact with the retainer 66 and opens the communication hole 66. Also, in this opening state of the communication hole 66, when the valve accommodating recess 65 is a little higher in pressure than the introducing chamber 36, the valve body 67 immediately closes the communication hole 66.

In the fourth preferred embodiment, the valve accommodating recess 65, the communication hole 66, the valve body 67, the retainer 68 and the like cooperatively form the suction timing control valve (the second suction valve) constituted of pressure difference regulating valve. Particularly, the valve accommodating recess 65 is regarded as a second port of the second suction valve. According to the fourth preferred embodiment, the same advantageous effects to those mentioned in the paragraphs (1) through (5) of the first preferred embodiment are obtained.

The present invention is not limited to the embodiments described above but may be modified into the following alternative embodiments.

In the above preferred embodiments, the communication hole 47 initiates communication with the compression chamber 26 during the volume-reducing process of the compression chamber 26. In an alternative embodiment, the communication hole 47 initiates communication with the compression chamber 26 at the time when the compression chamber 26 completes a volume-reducing process (when the piston 24 is positioned at the top dead center). In this case, the same advantageous effect as mentioned in the paragraph (4) of the first preferred embodiment is obtained.

In the above preferred embodiments, the communication hole 47 initiates communication with the compression chamber 26 during the volume-reducing process of the compression chamber 26. In an alternative embodiment, the communication hole 47 initiates communication with the compression chamber 26 at the time before the suction guiding hole 37 initiates communication with the compression chamber 26 during the volume-increasing process of the compression chamber 26.

In the above preferred embodiments, the circumferential width 35d between the opening of the communication hole 47 and the opening of the suction guiding hole 37 on the outer peripheral surface 35b of the rotary valve 35 is narrower than the maximum width in the circumferential direction at the opening of the introducing passage 18 (the opening at the inner peripheral surface 17a of the accommodating hole 17) such that both the openings simultaneously communicate with the same introducing passage 18. In an alternative embodiment, a circumferential width between the opening of the communication hole 47 and the opening of the suction guiding hole 37 is wider than the maximum width of the opening of the introducing passage 18 such that both the openings do not simultaneously communicate with the same introducing passage 18.

In the above preferred embodiments, a passage for communication between the suction guiding hole 37 and communication hole 47 and the compression chamber. 26 is the single introducing passage 18 which is shared by the holes 37, 47. In an alternative embodiment, a passage for communication between the communication hole 47 and the compression chamber 26 is provided in the cylinder block independently from the introducing passage 18. In this case, the opening of the communication hole 47 on the outer peripheral surface 35b of the rotary valve 35 is arranged offset from the opening of the suction guiding hole 37 in the direction of the axis L.

In an alternative embodiment to the above third preferred embodiment, an urging spring for urging the poppet 50 toward the side of the suction chamber 27 is arranged in the back pressure chamber 45, that is, between the inner bottom surface of the introducing chamber 36 and the inner bottom surface of the poppet 50.

In the above third preferred embodiment, the outer peripheral wall 39 of the rotary valve 35 doubles as the cylindrical wall for slidably holding the poppet 50. In an alternative embodiment, to the rotary valve 35, in addition to the outer peripheral wall (cylindrical wall) 39, an exclusive cylindrical wall for the poppet 50 is provided coaxially with the outer peripheral wall 39. That is, the rotary valve 35 has a double cylindrical structure including the outer peripheral wall 39 on the outer side and the cylindrical wall arranged inside the outer peripheral wall 39 for holding the poppet.

In the above third preferred embodiment, the poppet 50 adjusts the opening degree of the suction guiding hole 37. In an alternative embodiment, even if the poppet 50 slides, the poppet 50 is not related to adjusting the opening degree of the suction guiding hole 37. For example, in the above third preferred embodiment, the suction guiding hole 37 and the communication hole 47 are arranged such that they are overlapped in the direction of the axis S, however, in an alternative embodiment, the communication hole 47 is arranged on the front side relative to the suction guiding hole 37, while the circular clip 51 is arranged on the front side relative to the suction guiding hole 37.

In an alternative embodiment to the above fourth preferred embodiment, a portion for opening and closing the communication hole 66 in the valve body 67 serves as the first valve portion, while the second valve portion is provided in the valve body 67 for adjusting the opening degree of the suction guiding hole 37. Thus, the same advantageous effect mentioned in the paragraph (11) of the third preferred embodiment is obtained.

In an alternative embodiment, the present invention is applied to a wobble type variable displacement compressor.

In an alternative embodiment, the present invention is applied to a double-headed piston type compressor.

In an alternative embodiment, the present invention is applied to a wave cam piston type compressor.

Therefore, the present examples and embodiments are to be considered as illustrative and not restrictive, and the invention is not to be limited to the details given herein but may be modified within the scope of the appended claims.

In a piston type compressor, a piston is respectively accommodated in a plurality of cylinder bores arranged around a rotary shaft. A rotary valve has a suction guiding passage for introducing gas from a suction pressure region into a compression chamber when in communication therebetween. A suction timing control passage is formed in the rotary valve and is constantly in communication at its first end with the suction pressure region, while preceding the suction guiding passage communicating at its second end with the compression chamber. A suction timing control valve is arranged in the control passage, having a valve body which opens and closes the control passage in response to difference between force resulting from pressure on a side of the suction pressure region to open the valve body and force resulting from pressure on a side of the compression chamber to close the valve body.

## Claims

1. A piston type compressor having a housing forming a suction pressure region and a plurality of cylinder bores which respectively forms a compression chamber, a rotary shaft rotatably supported by the housing, the cylinder bores being arranged around the rotary shaft, a piston accommodated in each cylinder bore, and a rotary valve having a suction guiding passage for introducing gas from the suction pressure region into the compression chamber, the gas being introduced from the suction pressure region into the compression chamber through the suction guiding passage when the compression chamber communicates with the suction guiding passage, **characterized in that** a suction timing control passage is formed in the rotary valve, a first end of the suction timing control passage being constantly in communication with the suction pressure region, while a second end of the suction timing control passage precedes the suction guiding passage communicating with the compression chamber, and **in that** a suction timing control valve is arranged in the suction timing control passage, the suction timing control valve having a valve body which opens and closes the suction timing control passage in response to difference between force resulting from pressure on a side of the suction pressure region to open the valve body and force resulting from pressure on a side of the compression chamber to close the valve body.

2. The piston type compressor according to claim 1, wherein the time when the second end of the suction timing control passage initiates communication with the compression chamber Is during a volume-reducing process of the compression chamber or the time when the volume-reducing process completes.

3. The piston type compressor according to any one of claims 1 and 2, wherein the suction timing control valve is constituted of a poppet valve as the valve body.

4. The piston type compressor according to claim 3, wherein the poppet as the valve body is operable to open and close the suction timing control passage by sliding along a rotation center axis of the rotary valve.

5. The piston type compressor according to claim 4, wherein the poppet is arranged such that an axis of the poppet coincides the axis of the rotary valve.

6. The piston type compressor according to claim 5, wherein the poppet is located in the rotary valve so as to be slidable on a cylindrical inner surface of an outer peripheral wall of the rotary valve.

7. The piston type compressor according to any one of claims 1 and 2, wherein the suction timing control valve is constituted of a reed valve.

8. The piston type compressor according to any one of claims 1 through 7, wherein the valve body of the suction timing control valve includes a first valve portion for opening and closing the suction timing control passage and a second valve portion for adjusting opening degree of the suction guiding passage, the second valve portion increasing opening degree of the suction guiding passage in a state where the first valve portion opens the suction timing control passage, while reducing opening degree of the suction guiding passage in a state where the first valve portion closes the suction timing control passage.

9. The piston type compressor according to any one of claims 1 through 4 and 7, wherein an introducing passage extends from the compression chamber for communication between the suction guiding passage and the compression chamber, the introducing passage being opened to face an outer peripheral surface of the rotary valve, a valve body of the suction timing control valve being located offset from a rotation center axis of the rotary valve.

10. The piston type compressor according to claim 9, wherein the suction timing control valve is constituted of a poppet valve, a poppet of the poppet valve being located offset to a side of an axis of the piston relative to a hypothetical plane which includes the axis of the rotary valve and intersects vertically another hypothetical plane including the axis of the rotary valve and the axis of the piston positioned at a top dead center.

11. The piston type compressor according to any one of claims 1 through 10, wherein there is a state where the second end of the suction timing control passage and the suction guiding passage are simultaneously in communication with the same compression chamber.

12. The piston type compressor according to any one of claims 1 through 11, **characterized in that** a cam plate is operatively connected to the rotary shaft for converting rotation of the rotary shaft to reciprocation of the piston, displacement of the compressor being changed by varying stroke of the piston by varying inclination angle of the cam plate.
